# EUROPÄISCHE PATENTSCHRIFT

(11) **EP 3 875 993 B1**
(45) Veröffentlichungstag und Bekanntmachung des Hinweises auf die Patenterteilung: **25.10.2023**
(21) Anmeldenummer: 20160850.2
(22) Anmeldetag: 04.03.2020
(51) Int. Cl.: G01V 8/20

(54) **SENSORANORDNUNG UND EIN VERFAHREN ZUM BETRIEB EINER SENSORANORDNUNG**
SENSOR ASSEMBLY AND METHOD FOR OPERATING A SENSOR ASSEMBLY
DISPOSITIF CAPTEUR ET PROCÉDÉ DE FONCTIONNEMENT D'UN DISPOSITIF CAPTEUR

(43) Veröffentlichungstag der Anmeldung: 08.09.2021
(73) Patentinhaber: Leuze electronic GmbH + Co. KG, 73277 Owen/Teck (DE)
(72) Erfinder: Rohbeck, Volker, 85244 Röhrmoos (DE); Eder, Alexander, 86928 Hofstetten (DE)
(74) Vertreter: Ruckh, Rainer Gerhard

(56) Entgegenhaltungen:
- EP-A1- 1 873 442
- EP-A2- 2 017 524
- EP-A2- 2 306 063
- EP-A2- 2 639 603
- DE-A1-102006 008 805
- DE-A1-102012 102 067

## Beschreibung

Die Erfindung betrifft eine Sensoranordnung und ein Verfahren zum Betrieb einer Sensoranordnung.

Die Sensoranordnung, die insbesondere als Sicherheits-Sensoranordnung ausgebildet ist, und damit für einen Einsatz im Bereich der Sicherheitstechnik geeignet ist, umfasst wenigstens einen Lichtvorhang, der typischerweise eine Reihenanordnung von Lichtstrahlen emittierenden Sendern in einem ersten Gehäuse und eine Reihenanordnung von Lichtstrahlen empfangenden Empfängern in einem zweiten Gehäuse aufweist.

Mit dem Lichtvorhang wird eine Überwachungsfunktion derart realisiert, dass in einer Auswerteeinheit des Lichtvorhangs die Empfangssignale der Empfänger ausgewertet werden und damit ein binäres Schaltsignal generiert wird, dessen Schaltzustände angeben ob ein Objekt in einem vom Lichtvorhang überwachten Schutzfeld vorhanden ist oder nicht. Wird ein Objekt im Schutzfeld detektiert, wird durch das dadurch generierte Schaltsignal eine Sicherheitsfunktion ausgelöst, beispielsweise eine mit dem Lichtvorhang überwachte, gefahrbringende Maschine oder Anlage stillgesetzt.

Ein typischer Anwendungsfall für eine derartige Sensoranordnung ist die Zugangsabsicherung zu einem Gefahrenbereich einer gefahrbringenden Maschine oder Anlage. Der Zugang zu dem Gefahrenbereich erfolgt über eine Fördereinheit, welche vom Lichtvorhang überwacht wird.

Die Überwachungsfunktion des Lichtvorhangs soll dann derart ausgebildet sein, dass ein Passieren von sicherheitskritischen Objekten, insbesondere Personen, vom Lichtvorhang erfasst wird, sodass zur Vermeidung von Gefahrensituationen die Sicherheitsfunktion ausgelöst wird.

Zulässige Objekte, wie zum Beispiel Werkstücke oder Ladegüter, die der Maschine oder Anlage zur Durchführung von Arbeitsprozessen zugeführt werden müssen, sollen jedoch nicht zur Auslösung der Sicherheitsfunktion führen, um unnötige Stillstandzeiten der Maschine oder Anlage zu vermeiden.

Um dies zu erreichen ist für die Sensoranordnung in bekannter Weise eine Mutingfunktion vorgesehen.

Beispielsweise können dem Lichtvorhang in Förderrichtung der Fördereinheit Mutingsensoren vorgeordnet sein, mit denen zulässige Objekte erfasst werden. Ist dies der Fall, wird die Überwachungsfunktion des Lichtvorhangs für eine vorgegebene Zeit gemutet, das heißt überbrückt, sodass die zulässigen Objekte den Lichtvorhang passieren können, ohne dass dieser ein Schaltsignal, das die Sicherheitsfunktion auslöst, generiert.

Eine weitere Ausgestaltung einer Mutingfunktion ist das sogenannte Smart Prozess Gating (SPG). Bei diesem SPG wird ein erstes Steuersignal von einer Anlagensteuerung bereitgestellt, die insbesondere die Fördereinheit steuert. Dieses erste Steuersignal wird dann generiert, wenn sich ein zulässiges Objekt so dicht vor dem Lichtvorhang befindet, dass keine Person zwischen dem zulässigen Objekt und dem Lichtvorhang durchschlüpfen kann. Typischerweise beträgt der Abstand zwischen zulässigem Objekt und Lichtvorhang maximal 200 Millimeter. Ein zweites Steuersignal wird daraufhin vom Lichtvorhang selbst generiert, wenn dieser nach dem ersten Steuersignal einen Objekteingriff im Schutzfeld registriert. Nach Generierung des zweiten Steuersignals wird die Mutingfunktion aktiviert, das heißt die Überwachungsfunktion des Lichtvorhangs wird überbrückt, das heißt gemutet. Die Überbrückung wird für eine vorgegebene Zeit aufrechterhalten, die so gewählt ist, dass nach Ablauf dieser Zeit das zulässige Objekt das Schutzfeld wieder verlassen hat. Alternativ kann die Überbrückung auch durch Rücksetzen des ersten Steuersignals beendet werden.

Ein genereller Nachteil bei bekannten Muting-Verfahren besteht darin, dass neben dem zulässigen Objekt im Schutzfeld Lücken entstehen können, sodass sich zum Beispiel eine Person neben dem zulässigen Objekt im Schutzfeld befinden kann. Die Aktivierung der Mutingfunktion stellt in diesem Fall eine nicht kontrollierte Gefahrensituation dar, da sich die Person oder allgemein ein sicherheitskritisches Objekt im Schutzfeld aufhält, ohne dass dadurch vom Lichtvorhang die erforderliche Sicherheitsfunktion ausgelöst wird.

Die EP 2 017 524 A2 betrifft ein Lichtgitter, welches zur Erfassung von Objekten in einem Überwachungsbereich dient und eine Anzahl von Strahlachsen, welche jeweils von einem Sendelichtstrahlen emittierenden Sender und einem zugeordneten Empfänger gebildet sind, umfasst. Bei freiem Überwachungsbereich sind die Strahlachsen nicht unterbrochen und bei einem Objekteingriff ist im Überwachungsbereich wenigstens eine Strahlachse unterbrochen. Weiterhin umfasst das Lichtgitter eine Auswerteeinheit, mittels derer bei Eindringen eines sicherheitskritischen Objekts in den Überwachungsbereich eine Objektmeldung generierbar ist. In der Auswerteeinheit ist ein nichtsicherheitskritisches Objekt bei Passieren des Überwachungsbereichs dadurch identifizierbar, dass während wenigstens einer Einlaufphase und einer Durchlaufphase als unterschiedliche Muting-Phasen die durch das nichtsicherheitskritische Objekt unterbrochenen Strahlachsen registriert werden und anhand dieser überprüft wird, ob für die Einlaufphase und Durchlaufphase spezifische, in der Auswerteeinheit gespeicherte Objektmerkmale des nichtsicherheitskritischen Objekts erfüllt sind. Bei einem identifizierten nichtsicherheitskritischen Objekt wird in der Auswerteeinheit ein Mutingsignal generiert.

Die in DE 10 2012 102 067 A1 beschriebene Sensoranordnung umfasst einen Master-Sensor in Form eines Lichtvorhangs und wenigstens einen Slave-Sensor in Form eines optischen Sensors. Im Master-Sensor ist eine Rechnereinheit vorgesehen, mittels derer ein an den Master-Sensor angeschlossener Slave-Sensor erkannt wird und in Abhängigkeit hiervon eine Konfiguration der Sensoranordnung gebildet wird. Die Sensoranordnung kann in einem Muting-Betrieb betrieben werden.

Die EP 1 873 442 A1 betrifft ein Lichtgitter, das zur Sicherheitsüberwachung eines Durchgangs, durch welchen Objekte transportiert werden, vorgesehen ist. Die Signale des Lichtgitters werden als lineares Objekt-Bitmuster aufgenommen und mit entsprechenden in einer Auswerteeinheit gespeicherten Referenz-Bitmustern eines zugelassenen Objektes verglichen. Wird das Lichtgitter unterbrochen, so wird eine Sicherheitsfunktion ausgelöst. Die Auslösung dieser Sicherheitsfunktion wird unterdrückt (Muting), wenn die aufgenommenen Objekt-Bitmuster mit den gespeicherten Referenz-Bitmustern übereinstimmen. Zur Objekterkennung werden die Änderungen der jeweils obersten und/oder untersten abgedeckten Lichtstrahlen ausgewertet und auf Übereinstimmung mit den gespeicherten Referenz-Bitmustern verglichen.

Die EP 2 306 063 A2 betrifft einen Sicherheitssensor, welcher zur Gefahrenbereichsüberwachung einer Maschine oder Anlage dient. Der Sicherheitssensor umfasst eine Sensoreinheit mit wenigstens einem Lichtstrahlen emittierenden Sender und einem Lichtstrahlen empfangenden Empfänger zur Überwachung eines Schutzfelds sowie eine Auswerteeinheit, in welcher bei Erfassung eines Objekts im Schutzfeld als Sicherheitsfunktion ein Abschaltbefehl für die Maschine oder Anlage generiert wird. Mittels einer externen oder internen Überbrückungseinheit wird die Sicherheitsfunktion des Sicherheitssensors überbrückt, wenn innerhalb eines Zeitintervalls von zwei unabhängigen Signalquellen jeweils ein Objektvorhandensignal registriert wird. Eine der Signalquellen ist im Sicherheitssensor selbst integriert.

Die in EP 2 639 603 A2 beschriebene Sensoranordnung umfasst einen Master-Sensor in Form eines Lichtvorhangs und wenigstens einen Slave-Sensor in Form eines optischen Sensors. Mit dem Anschluss des Slave-Sensors an den Master-Sensor werden der Master-Sensor und/oder der Slave-Sensor selbsttätig konfiguriert.

Die DE 10 2006 008 805 A1 betrifft einen optischen Sensor und ein Verfahren zur Überwachung einer Schutzzone an einem Arbeitsmittel mittels eines optischen Sensors mit einer Kamera und einer Auswerteeinheit. Bei Erfassen eines sicherheitskritischen Objekts in der Schutzzone wird eine Objektmeldung generiert, mittels derer das Arbeitsmittel außer Betrieb gesetzt wird. Bei Erfassen eines nicht sicherheitskritischen Objekts innerhalb der Schutzzone wird wenigstens ein Bereich dieser Schutzzone überbrückt, so dass ein Eindringen eines sicherheitskritischen Objekts in diesen Bereich nicht zur Generierung einer Objektmeldung führt.

Der Erfindung liegt die Aufgabe zugrunde, die Funktionalität und die Sicherheit bei Gefahrenbereichsüberwachungen für eine Sensoranordnung der eingangs genannten Art zu erhöhen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit wenigstens einem Lichtvorhang, welche zur Überwachung wenigstens eines Schutzfeldes vorgesehen ist, wobei eine Überwachungsfunktion derart vorgesehen ist, dass bei Eingriff eines Objekts in das Schutzfeld ein Schaltsignal generiert wird, mittels dessen eine Sicherheitsfunktion auslösbar ist, und wobei eine Mutingfunktion vorgesehen ist, mittels derer die Überwachungsfunktion zumindest partiell überbrückbar ist. Der oder jeder Lichtvorhang weist eine Anordnung von Lichtstrahlen emittierenden Sendern und eine Reihenanordnung von Lichtstrahlen empfangenden Empfängern auf, wobei eine Objektdetektion durch Strahlunterbrechungen der Lichtstrahlen erfolgt. Die Mutingfunktion wird nur dann aktiviert, wenn innerhalb des Schutzfeldes genau ein zulässiges Objekt erkannt wird. Das zulässige Objekt weist eine Anordnung von Löchern auf, wobei in den Löchern geführte Lichtstrahlen nicht unterbrochen sind.

Die Erfindung betrifft weiterhin ein Verfahren zum Betrieb einer Sensoranordnung.

Mit der erfindungsgemäßen Sensoranordnung wird die Sicherheit bei durchzuführenden Gefahrenbereichsüberwachungen wesentlich erhöht. Mit der erfindungsgemäßen Gültigkeitsprüfung für ein Muting derart, dass eine Mutingfunktion nur dann aktiviert wird, wenn sich genau ein Objekt im von der Sensoranordnung überwachten Schutzfeld aufhält, wird ein gefahrbringender Zustand, dass sich neben dem zulässigen Objekt auch ein sicherheitskritisches Objekt wie zum Beispiel eine Person aufhält, erkannt, sodass in einem solchen Fall kein Muting freigegeben wird, wodurch verhindert wird, dass ein sicherheitskritisches Objekt die Sensoranordnung ohne Auslösung der Sicherheitsfunktion passieren kann. Dadurch werden Gefahrenzustände derart, dass sicherheitskritische Objekte insbesondere Personen, in den abzusichernden Gefahrenbereich einer Maschine oder Anlage gelangen können, während diese gefahrbringende Bewegungen ausführt, verhindert.

Ein wesentlicher Vorteil der Erfindung besteht darin, dass die Gültigkeitsprüfung für das Muting mit der Sensoranordnung selbst durchgeführt werden kann, sodass hierfür keinerlei zusätzliche Sensoren oder Steuerungskomponenten erforderlich sind. Weiterhin sind für die erfindungsgemäße Gültigkeitsprüfung keinerlei Parametrierungen, Programmierungen oder sonstige applikationsspezifische Anpassungen erforderlich, sodass auch ein Gerätetausch ohne Beeinträchtigung der Funktion der Sensoranordnung möglich ist.

Da die erfindungsgemäße Gültigkeitsprüfung für ein Muting mit der Sensoranordnung selbst und nicht mit externen Sensoren durchgeführt werden kann, können auch mehrere benachbarte angeordnete Sensoranordnungen ohne Gefahr von gegenseitigen Beeinflussungen eingesetzt werden.

Die erfindungsgemäße Sensoranordnung kann mit unterschiedlichen Muting-Systemen betrieben werden. Beispielsweise können Mutingsensoren zur Einleitung des Muting vorgesehen sein. Besonders vorteilhaft erfolgt das Muting nach dem erwähnten Smart Processing Gating (SPG).

Die Sensoranordnung weist als Sensorik wenigstens einen Lichtvorhang auf, wobei dieser Begriff auch allgemein diskret angeordnete Lichtschrankenanordnungen umfasst.

Erfindungsgemäß weist der oder jeder Lichtvorhang eine Anordnung von Lichtstrahlen emittierenden Sendern und eine Reihenanordnung von Lichtstrahlen empfangenden Empfängern auf. Eine Objektdetektion erfolgt durch Strahlunterbrechungen der Lichtstrahlen.

Bevorzugt sind die Sender einerseits und die Empfänger andererseits in separaten Gehäusen angeordnet, die an gegenüberliegenden Rändern des überwachten Schutzfeldes positioniert sind. Der Lichtvorhang arbeitet dann nach dem Lichtschrankenprinzip. Generell kann der Lichtvorhang auch nach dem Reflexionslichtschrankenprinzip arbeiten. Dann sind die Sender und Empfänger in einem Gehäuse an einem ersten Rand des Schutzfeldes angeordnet, wobei am gegenüberliegenden Rand des Schutzfeldes ein Reflektor angeordnet ist.

Erfindungsgemäß weist das zulässige Objekt eine Anordnung von Löchern auf, wobei in den Löchern geführte Lichtstrahlen nicht unterbrochen sind.

Damit können auch komplexer ausgebildete Objekte als zulässige Objekte erkannt werden, wodurch die Funktionalität der Sensoranordnung erhöht wird. Dabei wird lediglich gefordert, dass die Löcher des Objekts kleiner als eine vorgegebene Maximalgröße sind, sodass bei der Detektion dieses Objekts nur einzelne Lichtstrahlen aufgrund der Löcherstruktur nicht unterbrochen sind und so das Objekt als Ganzes als zulässiges Objekt erkannt werden kann.

Besonders vorteilhaft wird das zulässige Objekt hinsichtlich seiner Position und Größe überwacht.

Dadurch können insbesondere Objekte als zulässige Objekte erkannt werden, wenn diese schräg oder geneigt im Schutzfeld angeordnet sind.

Weiter vorteilhaft gilt ein zulässiges Objekt nur dann als erkannt, wenn dieses vollständig erfasst wird.

Eine vollständige Erfassung des zulässigen Objekts liegt dann vor, wenn beidseits der durch das zulässige Objekt unterbrochenen Lichtstrahlen noch nicht unterbrochene Lichtstrahlen vorhanden sind. In diesem Fall kann die Größe des zulässigen Objekts anhand der unterbrochenen Strahlen bestimmt werden.

Alternativ können zulässige Objekte auch unvollständig erfasst werden, wenn diese in das Schutzfeld einfahren oder aus diesem ausfahren. In diesem Fall ist keine Größenbestimmung des zulässigen Objekts möglich.

Gemäß einer vorteilhaften Ausführungsform wird die Zulässigkeitsprüfung erst nach einer vorgegebenen Verzögerungszeit nach Erfassung eines Objekts aktiviert.

Damit kann der Zeitpunkt der Aktivierung an applikationsspezifische Anforderungen angepasst werden. Die Zulässigkeitsprüfung muss dann nicht sofort bei Erkennen des Objekts gestartet werden, vielmehr kann dieses auch erst dann gestartet werden, wenn das zulässige Objekt das Schutzfeld der Sensoranordnung verlässt oder bereits verlassen hat.

Weiter vorteilhaft kann für die Erfassung des zulässigen Objekts eine minimale und/oder maximale Obj ektdurchlaufzeit vorgegeben sein.

Damit kann ein zusätzliches Kriterium für das Vorhandensein eines zulässigen Objekts derart vorgegeben werden, dass sich zu schnell oder zu langsam bewegende Objekte nicht als zulässige Objekte klassifiziert werden.

Die Funktionalität der erfindungsgemäßen Sensoranordnung ist vorteilhaft dadurch erweitert, dass für diese ein Blanking und/oder eine reduzierte Auflösung vorgebbar ist.

Durch Vorgabe von Blanking-Bereichen können feststehende, in das Schutzfeld ragende Teile wie zum Beispiel Pfeiler oder Träger ausgeblendet werden. Diese Teile führen zu einer dauerhaften Unterbrechung einzelner Lichtstrahlen, die durch die Blanking-Funktion von der Mutingfunktion ausgenommen werden.

Durch eine reduzierte Auflösung kann eine minimale Objektgröße von zu detektierenden Objekten vorgegeben werden. Dies wird dadurch erreicht, dass für eine Objektdetektion nicht nur ein unterbrochener Lichtstrahl sondern mehrere zusammenhängende unterbrochene Lichtstrahlen gefordert werden.

Eine weitere vorteilhafte Erweiterung der Funktionalität der Sensoranordnung ist dadurch gegeben, dass eine partielle Mutingfunktion aktivierbar ist, bei welcher für Teile des oder der Lichtvorhänge die Überwachungsfunktion erhalten bleibt.

Dies bedeutet, dass bei Aktivierung der Mutingfunktion nicht die gesamte Sensoranordnung überbrückt ist, sondern nur Teile hiervon, insbesondere Teilbereiche eines Lichtvorhangs der Sensoranordnung. Die überbrückten Teile des Schutzfeldes umfassen den Bereich des erkannten zulässigen Objekts, sodass dieses ohne Auslösung der Sicherheitsfunktion die Sensoranordnung, insbesondere einen Lichtvorhang passieren kann. Die weiteren Bereiche des Schutzfeldes können von der Überbrückung ganz oder teilweise ausgenommen sein, sodass für diese die Überwachungsfunktion noch aktiv bleibt, das heißt ein Eindringen von Objekten in die nicht überbrückten Bereiche führt zur Auslösung der Sicherheitsfunktion.

Im einfachsten Fall umfasst die Sensoranordnung nur einen Lichtvorhang.

Gemäß einer alternativen Ausgestaltung umfasst diese Sensoranordnung mehrere in einer Reihe angeordnete Lichtvorhänge.

Durch die Reihenanordnung von Lichtvorhängen wird das Schutzfeld erweitert, wobei besonders vorteilhaft sich die einzelnen Teilschutzfelder der einzelnen Lichtvorhänge lückenlos zu einem gesamten Schutzfeld ergänzen.

Gemäß einer weiteren alternativen Ausgestaltung umfasst die Sensoranordnung zwei orthogonal zueinander angeordnete Lichtvorhänge.

Durch die orthogonale Anordnung der beiden Lichtvorhänge kann das jeweilige zulässige Objekt von mehreren, vorzugsweise allen Seiten erfasst werden, sodass eine besonders genaue und vollständige Erfassung des zulässigen Objekts gewährleistet ist.

In diesem Fall wird zuverlässig ausgeschlossen, dass eine Person auf dem zulässigen Objekt sitzend oder neben diesem angeordnet unbemerkt durch das Schutzfeld gelangen kann.

Gemäß einer vorteilhaften Ausführungsform ist die Sensoranordnung als Sicherheits-Sensoranordnung ausgebildet. Hierzu wird der oder die Lichtvorhänge als Sicherheitssensor ausgebildet, welche einen fehlersicheren Aufbau aufweisen.

Die Erfindung wird im Folgenden anhand der Zeichnungen erläutert. Es zeigen:
- Figur 1:: Schematische Darstellung der erfindungsgemäßen Sensoranordnung als Zugangsabsicherung.
- Figur 2:: Erstes Ausführungsbeispiel der erfindungsgemäßen Sensoranordnung.
- Figur 3:: Zweites Ausführungsbeispiel der erfindungsgemäßen Sensoranordnung.
- Figur 4:: Drittes Ausführungsbeispiel der erfindungsgemäßen Sensoranordnung.

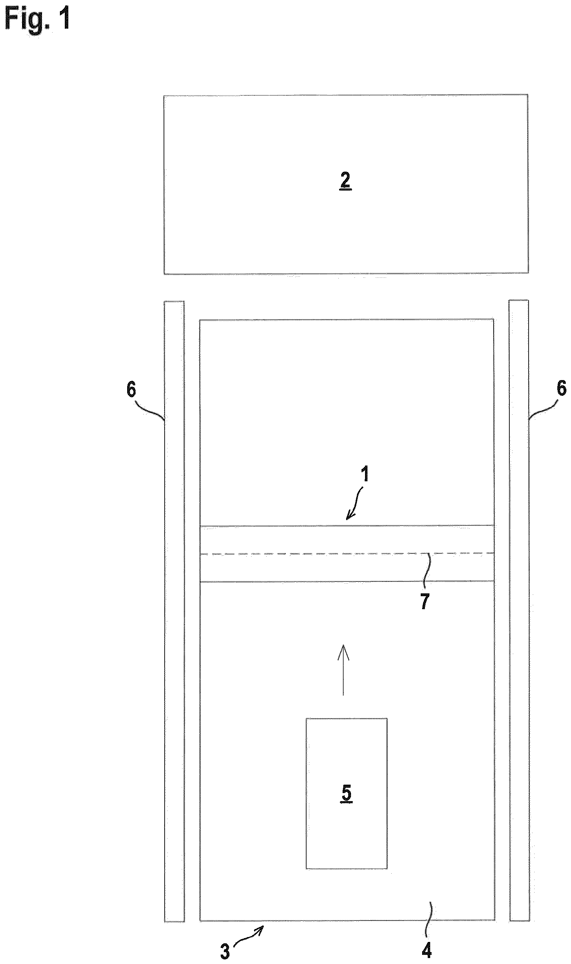

Figur 1 zeigt schematisch die erfindungsgemäße Sensoranordnung 1 als Zugangsabsicherung zu einem Gefahrenbereich an einer Anlage 2, die mit einer Steuerung gesteuert wird. Mit der Steuerung wird auch eine Fördereinheit 3 gesteuert, wobei mit einem Förderband 4 der Fördereinheit 3 Werkstücke, Ladegut oder allgemein Transportgut 5 der Anlage 2 zur Durchführung von Arbeitsprozessen zugeführt werden. Die Förderrichtung ist in Figur 1 mit einem Pfeil gekennzeichnet.

Die Fördereinheit 3 ist seitlich mit Umzäunungen 6 geschützt, um so einen unkontrollierten Zugang zu dem Gefahrenbereich der Anlage 2 zu verhindern. Jedoch könnten Personen sich auf dem Förderband 4 bewegend zur Anlage 2 gelangen und so Gefährdungen durch die Anlage 2 ausgesetzt sein.

Um einen unkontrollierten Zugang von Personen oder allgemein sicherheitskritischen Objekten über die Fördereinheit 3 zur Anlage 2 zu erfassen, ist die Sensoranordnung 1 im Bereich der Fördereinheit 3 so installiert, dass der Bereich oberhalb des Förderbands 4 über die gesamte Breite der Fördereinheit 3 innerhalb eines Schutzfeldes 7 überwacht wird.

Mit der Sensoranordnung 1 wird eine Überwachungsfunktion derart realisiert, dass mit dieser bei Registrieren eines Objekteingriffs im Schutzfeld 7 ein Schaltsignal derart generiert wird, dass eine Sicherheitsfunktion ausgelöst wird, beispielsweise die Anlage 2 stillgesetzt wird, sodass von dieser keine Gefahren mehr ausgehen.

Damit erfolgt ein Schutz für sicherheitskritische Objekte, insbesondere Personen. Jedoch soll das Transportgut 5 ungehindert die Sensoranordnung 1 passieren können, das heißt die Sensoranordnung 1 darf bei Passieren der Sensoranordnung 1 kein die Sicherheitsfunktion auslösendes Schaltsignal generieren.

Hierzu ist eine Mutingfunktion vorgesehen, die die Sensoranordnung 1 zumindest partiell mutet, das heißt überbrückt, sodass ein Transportgut 5 als zulässiges Objekt beim Passieren des Schutzfeldes 7 nicht zur Auslösung der Sicherheitsfunktion führt.

Das Muting kann abhängig von Signalen von der Sensoranordnung 1 vorgelagerten Mutingsensoren initiiert werden.

Im vorliegenden Fall erfolgt ein Muting nach dem SPG-Verfahren. Bei diesem SPG-Verfahren wird ein erstes Steuersignal von einer Steuerung bereitgestellt. Dieses erste Steuersignal wird dann generiert, wenn sich ein zulässiges Objekt so dicht vor der Sensoranordnung 1 befindet, dass keine Person zwischen dem zulässigen Objekt und der Sensoranordnung 1 durchschlüpfen kann. Typischerweise beträgt der Abstand zwischen zulässigem Objekt und Sensoranordnung 1 maximal 200 Millimeter. Ein zweites Steuersignal wird daraufhin von der Sensoranordnung 1 selbst generiert, wenn diese nach dem ersten Steuersignal einen Objekteingriff im Schutzfeld 7 registriert. Nach Generierung des zweiten Steuersignals wird die Mutingfunktion aktiviert, das heißt die Überwachungsfunktion der Sensoranordnung 1 wird überbrückt, das heißt gemutet. Die Überbrückung wird für eine vorgegebene Zeit aufrechterhalten, die so gewählt ist, dass nach Ablauf dieser Zeit das zulässige Objekt das Schutzfeld 7 wieder verlassen hat. Alternativ kann die Überbrückung auch durch Rücksetzten des ersten Steuersignals beendet werden.

Erfindungsgemäß wird die Mutingfunktion nur dann aktiviert, wenn im Schutzfeld 7 nur ein zulässiges Objekt (gebildet von einem Transportgut 5) mittels der Sensoranordnung 1 erkannt wird.

Dabei kann das zulässige Objekt eine Anordnung von Löchern aufweisen, wobei in den Löchern geführte Lichtstrahlen 10 nicht unterbrochen sind.

Insbesondere kann das zulässige Objekt hinsichtlich seiner Position und Größe überwacht sein.

Weiterhin kann vorgesehen sein, dass ein zulässiges Objekt nur dann als erkannt gilt, wenn dieses vollständig erfasst wird.

Desweiteren kann die Zulässigkeitsprüfung erst nach einer vorgegebenen Verzögerungszeit nach Erfassung des Objekts aktiviert sein.

Schließlich kann für die Erfassung des zulässigen Objekts eine minimale und/ oder maximale Objektdurchlaufzeit vorgegeben sein.

Die Mutingfunktion kann generell auch mit bekannten weiterer Funktionen wie einem Blanking oder einer reduzierten Auflösung kombiniert werden.

In die Sensoranordnung 1 können Steuersignale zur Vorgabe der Funktionalität der Mutingfunktion eingebbar sein.

Die erfindungsgemäße Sensoranordnung 1 umfasst eine Anordnung von Lichtvorhängen 8. Im vorliegenden Fall ist die Sensoranordnung 1 als Sicherheits-Sensoranordnung ausgebildet. Die Lichtvorhänge 8 sind dann als Sicherheitssensoren mit einem fehlersicheren Aufbau ausgebildet.

Der oder jeder Lichtvorhang 8 der Sensoranordnung 1 weist ein erstes Gehäuse 9 mit einer Reihenanordnung von Lichtstrahlen 10 emittierenden Sendern 11 auf, die von einer nicht dargestellten Sendersteuerung gesteuert werden. Weiterhin ist eine in einem zweiten Gehäuse 12 angeordnete Reihenanordnung von Lichtstrahlen 10 empfangenden Empfängern 13 vorgesehen, welchen eine nicht dargestellte Auswerteeinheit zugeordnet ist, in welcher die Empfangssignale der Empfänger 13 zur Generierung eines binären Schaltsignals umgewertet werden. Die Schaltzustände des Schaltsignals geben an, ob sich in dem vom Lichtvorhang 8 überwachten Schutzfeld 7 ein Objekt befindet oder nicht. Bei einem als Sicherheitssensor ausgebildeten Lichtvorhang 8 weist die Auswerteeinheit einen redundanten, zweikanaligen Aufbau auf. Die Sender 11 und Empfänger 13 des Lichtvorhangs 8 bilden jeweils Paare derart, dass bei leerem Schutzfeld 7 die Lichtstrahlen 10 des Senders 11 auf den zugeordneten Empfänger 13 des Paares geführt sind. Bei einem Objekteingriff erfolgt eine Unterbrechung wenigstens eines der Lichtstrahlen 10. Die Sender-Empfänger-Paare werden in Messzyklen zyklisch einzeln nacheinander aktiviert.

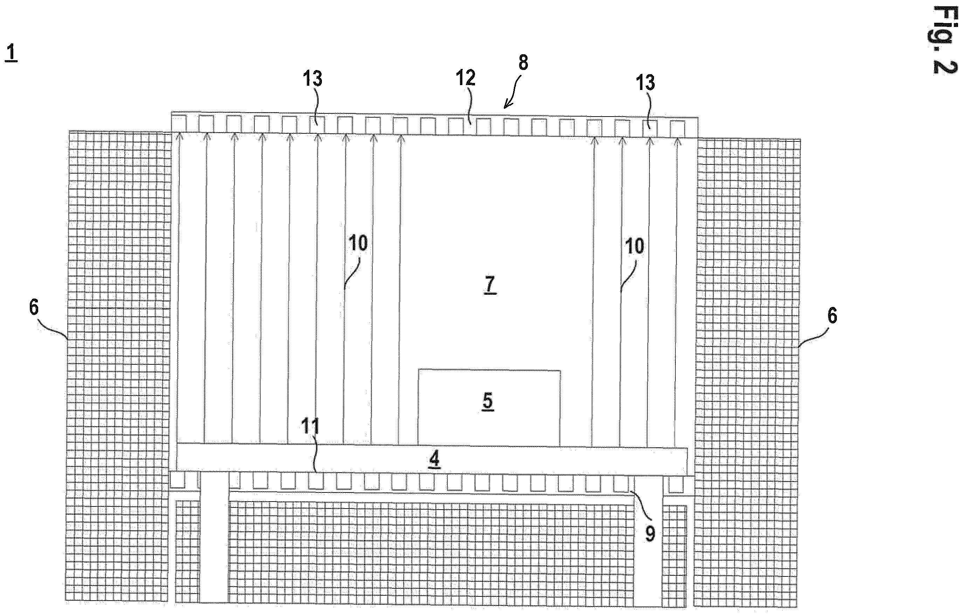

Die Sensoranordnung 1 gemäß Figur 2 umfasst nur einen Lichtvorhang 8. Das Gehäuse 9 mit den Sendern 11 ist unterhalb des lichtdurchlässigen Förderbands 4 mit ebenfalls in horizontaler Richtung verlaufender Längsachse installiert.

In Figur 2 ist die Situation des Muting dargestellt. Nach dem ersten und zweiten Steuersignal gemäß dem SPG-Verfahren wird anhand der registrierten Zusammenhängenden Unterbrechungen von Lichtstrahlen 10 genau ein zulässiges Objekt in Form eines Transportguts 5 im Schutzfeld 7 detektiert. Damit ist die Gültigkeitsbedingung für das Muting erfüllt, sodass der Lichtvorhang 8 für eine vorgegebene Zeit gemutet wird, insbesondere bis das zulässige Objekt das Schutzfeld 7 des Lichtvorhangs 8 verlassen hat.

Mit dem Muting kann der gesamte Lichtvorhang 8 überbrückt werden. Alternativ ist auch ein partielles Muting möglich. Bei diesem kann für Bereiche des Lichtvorhangs 8, in welchen das zulässige Objekt nicht die Lichtstrahlen 10 unterbricht, die Überwachungsfunktion aufrechterhalten werden, das heißt dort erfolgende Objekteingriffe führen zur Auslösung der Sicherheitsfunktion.

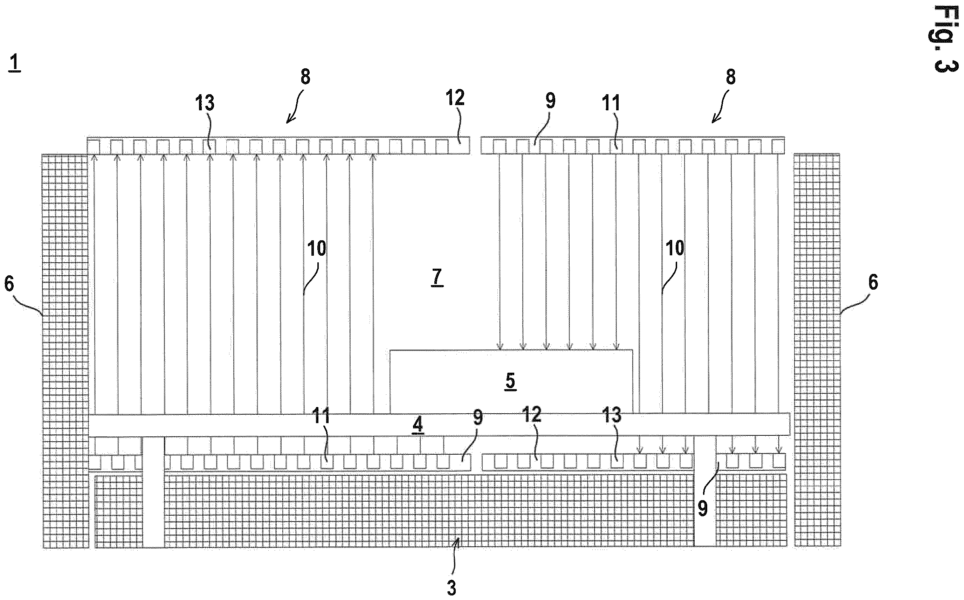

Figur 3 zeigt eine Erweiterung der Ausführungsform gemäß Figur 2. In diesem Fall sind zwei Lichtvorhänge 8 in Reihe angeordnet, sodass sich deren Schutzfelder 7 als Teil-Schutzfelder zu einem Schutzfeld 7 als Gesamt-Schutzfeld lückenlos ergänzen.

Die Schaltsignale der beiden Lichtvorhänge 8 werden vorteilhaft in einer Logikschaltung zu einem Gesamt-Schaltsignal verknüpft. Die Logikschaltung kann in einer der beiden Auswerteeinheiten der Lichtvorhänge 8 integriert sein oder eine separate Einheit bilden.

Wie Figur 3 zeigt liegt ein Transportgut 5, das als zulässiges Objekt erkannt wird sowohl im Teil-Schutzfeld des ersten Lichtvorhangs 8 als auch im Teil-Schutzfeld des zweiten Schutzfeldes 7. Auch in diesem Fall ist die Gültigkeitsbedingung für das Muting erfüllt, da wieder genau ein zulässiges Objekt im Schutzfeld 7 erkannt wird.

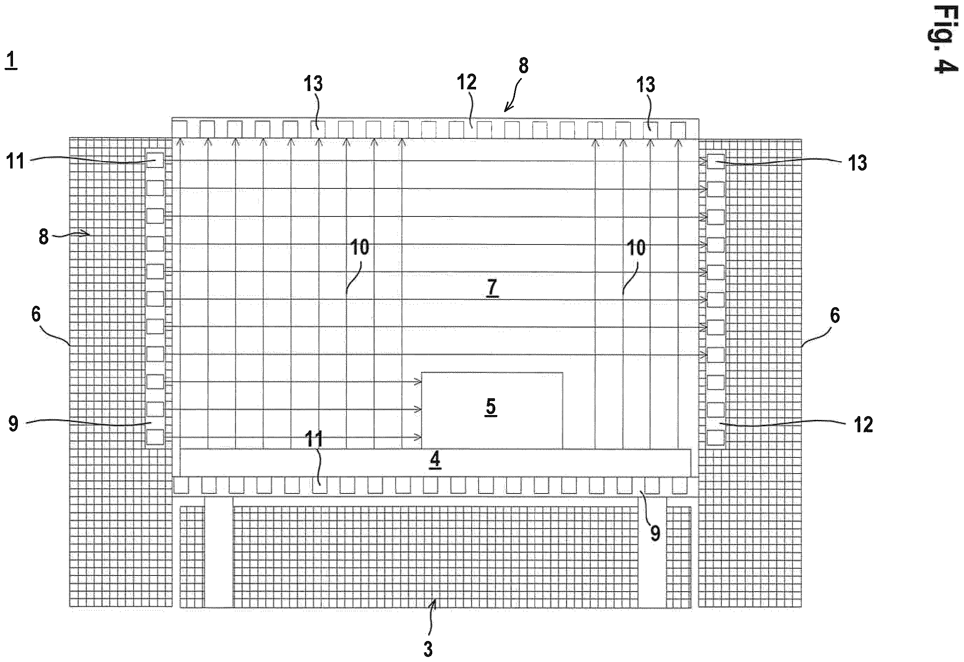

Die Ausführungsform gemäß Figur 4 unterscheidet sich von der Ausführungsform gemäß Figur 3 dadurch, dass die beiden Lichtvorhänge 8 orthogonal zueinander angeordnet sind. Dadurch wird das zulässige Objekt von allen Seiten detektiert.

### Bezugszeichenliste

- (1): Sensoranordnung
- (2): Anlage
- (3): Fördereinheit
- (4): Förderband
- (5): Transportgut
- (6): Umzäunung
- (7): Schutzfeld
- (8): Lichtvorhang
- (9): Gehäuse, erstes
- (10): Lichtstrahlen
- (11): Sender
- (12): Gehäuse, zweites
- (13): Empfänger

## Patentansprüche

1. Sensoranordnung (1) mit wenigstens einem Lichtvorhang (8), welche zur Überwachung wenigstens eines Schutzfeldes (7) vorgesehen ist, wobei eine Überwachungsfunktion derart vorgesehen ist, dass bei Eingriff eines Objekts in das Schutzfeld (7) ein Schaltsignal generiert wird, mittels dessen eine Sicherheitsfunktion auslösbar ist, und wobei eine Mutingfunktion vorgesehen ist, mittels derer die Überwachungsfunktion zumindest partiell überbrückbar ist, wobei der oder jeder Lichtvorhang (8) eine Anordnung von Lichtstrahlen (10) emittierenden Sendern (11) und eine Reihenanordnung von Lichtstrahlen (10) empfangenden Empfängern (13) aufweist, wobei eine Objektdetektion durch Strahlunterbrechungen der Lichtstrahlen (10) erfolgt, wobei die Mutingfunktion nur dann aktiviert wird, wenn innerhalb des Schutzfeldes (7) genau ein zulässiges Objekt erkannt wird,
**dadurch gekennzeichnet,**
**dass** das zulässige Objekt eine Anordnung von Löchern aufweist, wobei in den Löchern geführte Lichtstrahlen (10) nicht unterbrochen sind.

2. Sensoranordnung (1) nach Anspruch 1, **dadurch gekennzeichnet, dass** das zulässige Objekt hinsichtlich seiner Position und Größe überwacht wird.

3. Sensoranordnung (1) nach einem der Ansprüche 1 oder 2, **dadurch gekennzeichnet, dass** ein zulässiges Objekt nur dann als erkannt gilt, wenn dieses vollständig erfasst wird.

4. Sensoranordnung (1) nach einem der Ansprüche 1 bis 3, **dadurch gekennzeichnet, dass** die Mutingfunktion erst nach einer vorgegebenen Verzögerungszeit nach Erfassung des zulässigen Objekts aktiviert wird.

5. Sensoranordnung (1) nach einem der Ansprüche 1 bis 4, **dadurch gekennzeichnet, dass** für die Erfassung des zulässigen Objekts eine minimale und/oder maximale Objektdurchlaufzeit vorgegeben ist.

6. Sensoranordnung (1) nach einem der Ansprüche 1 bis 5, **dadurch gekennzeichnet, dass** für diese ein Blanking und/oder eine reduzierte Auflösung vorgebbar ist.

7. Sensoranordnung (1) nach einem der Ansprüche 1 bis 6, **dadurch gekennzeichnet, dass** eine partielle Mutingfunktion aktivierbar ist, bei welcher für Teile des oder der Lichtvorhänge (8) die Überwachungsfunktion erhalten bleibt.

8. Sensoranordnung (1) nach einem der Ansprüche 1 bis 7, **dadurch gekennzeichnet, dass** in diese Steuersignale zur Vorgabe der Funktionalität der Mutingfunktion eingebbar sind.

9. Sensoranordnung (1) nach einem der Ansprüche 1 bis 8, **dadurch gekennzeichnet, dass** diese nur einen Lichtvorhang (8) umfasst.

10. Sensoranordnung (1) nach einem der Ansprüche 1 bis 9, **dadurch gekennzeichnet, dass** diese mehrere in einer Reihe angeordnete Lichtvorhänge (8) aufweist.

11. Sensoranordnung (1) nach einem der Ansprüche 1 bis 9, **dadurch gekennzeichnet, dass** diese zwei orthogonal zueinander angeordnete Lichtvorhänge (8) aufweist.

12. Sensoranordnung (1) nach einem der Ansprüche 1 bis 11, **dadurch gekennzeichnet, dass** diese als Sicherheits-Sensoranordnung ausgebildet ist.

13. Verfahren zum Betrieb einer Sensoranordnung (1) mit wenigstens einem Lichtvorhang (8), welche zur Überwachung wenigstens eines Schutzfeldes vorgesehen ist, wobei eine Überwachungsfunktion derart vorgesehen ist, dass bei Eingriff eines Objekts in das Schutzfeld (7) ein Schaltsignal generiert wird, mittels dessen eine Sicherheitsfunktion auslösbar ist, und wobei eine Mutingfunktion vorgesehen ist, mittels derer die Überwachungsfunktion zumindest partiell überbrückbar ist, wobei der oder jeder Lichtvorhang (8) eine Anordnung von Lichtstrahlen (10) emittierenden Sendern (11) und eine Reihenanordnung von Lichtstrahlen (10) empfangenden Empfängern (13) aufweist, wobei eine Objektdetektion durch Strahlunterbrechungen der Lichtstrahlen (10) erfolgt, wobei die Mutingfunktion nur dann aktiviert wird, wenn innerhalb des Schutzfeldes (7) genau ein zulässiges Objekt erkannt wird,
**dadurch gekennzeichnet,**
**dass** das zulässige Objekt eine Anordnung von Löchern aufweist, wobei in den Löchern geführte Lichtstrahlen (10) nicht unterbrochen sind.

## Claims

1. A sensor assembly (1) having at least one light curtain (8) which is provided for monitoring at least one protective field (7), a monitoring function being provided in such a way that, when an object encroaches on the protective field (7), a switching signal is generated by means of which a safety function can be triggered, and a muting function being provided, by means of which the monitoring function can be at least partially bypassed,
wherein said or each light curtain (8) has an assembly of transmitters (11) emitting light beams (10) and a row assembly of receivers (13) receiving light beams (10), wherein object detection is effected by beam interruptions of the light beams (10),
wherein the muting function is only activated if exactly one permissible object is detected within the protective field (7),
**characterised in**
**that** the permissible object has an assembly of holes, wherein light beams (10) guided in the holes are not interrupted.

2. A sensor assembly (1) according to claim 1, **characterised in that** the permissible object is monitored with regard to its position and size.

3. A sensor assembly (1) according to one of claims 1 or 2, **characterised in that** a permissible object is only considered to be detected if it is detected completely.

4. A sensor assembly (1) according to one of claims 1 to 3, **characterised in that** the muting function is only activated after a predetermined delay time after detection of the permissible object.

5. A sensor assembly (1) according to one of claims 1 to 4, **characterised in that** a minimum and/or maximum object transit time is predetermined for the detection of the permissible object.

6. A sensor assembly (1) according to one of claims 1 to 5, **characterised in that** a blanking and/or a reduced resolution can be preset for it.

7. A sensor assembly (1) according to one of claims 1 to 6, **characterised in that** a partial muting function can be activated, in which the monitoring function is maintained for parts of the light curtain(s) (8).

8. A sensor assembly (1) according to one of the claims 1 to 7, **characterised in that** control signals can be input into it for specifying the functionality of the muting function.

9. A sensor assembly (1) according to one of claims 1 to 8, **characterised in that** it comprises only one light curtain (8).

10. A sensor assembly (1) according to one of claims 1 to 9, **characterised in that** it has a plurality of light curtains (8) arranged in a row.

11. A sensor assembly (1) according to one of the claims 1 to 9, **characterised in that** it comprises two light curtains (8) arranged orthogonally to one another.

12. A sensor assembly (1) according to one of claims 1 to 11, **characterised in that** it is designed as a safety sensor assembly.

13. A method for operating a sensor assembly (1) having at least one light curtain (8), which is provided for monitoring at least one protective field, wherein a monitoring function is provided in such a way that, when an object encroaches on the protective field (7), a switching signal is generated by means of which a safety function can be triggered, and wherein a muting function is provided, by means of which the monitoring function can be at least partially bypassed,
wherein said or each light curtain (8) has an assembly of transmitters (11) emitting light beams (10) and a row assembly of receivers (13) receiving light beams (10),
wherein object detection is effected by beam interruptions of the light beams (10), wherein the muting function is only activated if exactly one permissible object is detected within the protective field (7),
**characterised in that** the permissible object has an assembly of holes, wherein light beams (10) guided in the holes are not interrupted.

## Revendications

1. Dispositif capteur (1) comportant au moins une barrière immatérielle (8) destinée à surveiller au moins un champ de protection (7), une fonction de surveillance étant assurée de telle sorte que, lorsqu'un objet pénètre dans le champ de protection (7), un signal de commutation est généré au moyen duquel une fonction de sécurité peut être déclenchée, et une fonction d'inhibition étant assurée, au moyen de laquelle la fonction de surveillance peut être au moins partiellement contournée,
dans lequel ledit ou chaque rideau lumineux (8) comporte un ensemble d'émetteurs (11) émettant des faisceaux lumineux (10) et une rangée de récepteurs (13) recevant des faisceaux lumineux (10), la détection de l'objet étant effectuée par l'interruption des faisceaux lumineux (10),
la fonction d'inhibition n'est activée que si exactement un objet autorisé est détecté dans le champ de protection (7),
**caractérisé en ce**
**que** l'objet autorisé comporte un ensemble de trous, dans lequel les faisceaux lumineux (10) guidés dans les trous ne sont pas interrompus.

2. Dispositif capteur (1) selon la revendication 1, **caractérisé en ce que** l'objet autorisé est surveillé en fonction de sa position et de sa taille.

3. Dispositif capteur (1) selon l'une des revendications 1 ou 2, **caractérisé en ce qu'**un objet autorisé n'est considéré comme détecté que s'il est détecté complètement.

4. Dispositif capteur (1) selon l'une des revendications 1 à 3, **caractérisé en ce que** la fonction d'inhibition n'est activée qu'après un délai prédéterminé suivant la détection de l'objet autorisé.

5. Dispositif capteur (1) selon l'une des revendications 1 à 4, **caractérisé en ce qu'**un temps de transit minimal et/ou maximal de l'objet est prédéterminé pour la détection de l'objet autorisé.

6. Dispositif capteur (1) selon l'une des revendications 1 à 5, **caractérisé en ce qu'**il est possible de prérégler une occultation et/ou une résolution réduite.

7. Dispositif capteur (1) selon l'une des revendications 1 à 6, **caractérisé en ce qu'**une fonction d'inhibition partielle peut être activée, dans laquelle la fonction de surveillance est maintenue pour certaines parties de la ou des barrières immatérielles (8).

8. Dispositif capteur (1) selon l'une des revendications 1 à 7, **caractérisé en ce que** des signaux de commande peuvent y être introduits pour spécifier la fonctionnalité de la fonction d'inhibition.

9. Dispositif capteur (1) selon l'une des revendications 1 à 8, **caractérisé en ce qu'**il ne comprend qu'un seul rideau lumineux (8).

10. Dispositif capteur (1) selon l'une des revendications 1 à 9, **caractérisé en ce qu'**il comporte plusieurs rideaux lumineux (8) disposés en rangée.

11. Dispositif capteur (1) selon l'une des revendications 1 à 9, **caractérisé en ce qu'**il comprend deux rideaux de lumière (8) disposés orthogonalement l'un par rapport à l'autre.

12. Dispositif capteur (1) selon l'une des revendications 1 à 11, **caractérisé en ce qu'**il est conçu comme un dispositif capteur de sécurité.

13. Procédé de fonctionnement d'un dispositif capteur (1) comportant au moins un rideau lumineux (8) destiné à surveiller au moins un champ de protection, dans lequel une fonction de surveillance est prévue de manière à générer un signal de commutation permettant de déclencher une fonction de sécurité lorsqu'un objet empiète sur le champ de protection (7), et dans lequel une fonction d'inhibition est prévue, permettant de contourner au moins partiellement la fonction de surveillance,
dans lequel ledit ou chaque rideau lumineux (8) comporte un ensemble d'émetteurs (11) émettant des faisceaux lumineux (10) et une rangée de récepteurs (13) recevant des faisceaux lumineux (10),
la détection des objets est effectuée par des interruptions des faisceaux lumineux (10), la fonction d'inhibition n'est activée que si exactement un objet autorisé est détecté dans le champ de protection (7),
**caractérisé en ce que** l'objet autorisé comporte un ensemble de trous,
dans lequel les faisceaux lumineux (10) guidés dans les trous ne sont pas interrompus.
